(19) Europäisches Patentamt European Patent Office Office européen des brevets

(11) **EP 2 235 399 B1**

(12) **EUROPEAN PATENT SPECIFICATION**

(45) Date of publication and mention
of the grant of the patent:
**02.04.2014 Bulletin 2014/14**

(21) Application number: **09707710.1**

(22) Date of filing: **08.01.2009**

(51) Int Cl.:
*F16H 55/36* (2006.01)    *F16F 15/12* (2006.01)
*F16H 55/49* (2006.01)    *F16H 7/02* (2006.01)

(86) International application number:
**PCT/US2009/000101**

(87) International publication number:
**WO 2009/099505 (13.08.2009 Gazette 2009/33)**

(54) **TORSIONAL DECOUPLER**

TORSIONSENTKOPPLER

DECOUPLEUR DE TORSION

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **31.01.2008 US 12118**

(43) Date of publication of application:
**06.10.2010 Bulletin 2010/40**

(73) Proprietor: **The Gates Corporation
Denver, CO 80202 (US)**

(72) Inventors:
• **ALI, Imtiaz
Lathrup Village
MI 48076 (US)**
• **SERKH, Alexander
Troy
MI 48098-4696 (US)**

(74) Representative: **Tunstall, Christopher Stephen
Carpmaels & Ransford LLP
One Southampton Row
London WC1B 5HA (GB)**

(56) References cited:
WO-A1-2005/057037    WO-A1-2005/057037
WO-A1-2007/080607    KR-Y1- 200 267 231
US-A- 3 222 953    US-A- 4 710 152
US-B2- 7 153 227

**Description**

Field of the Invention

The invention relates to a torsional decoupler, and more particularly, to a torsional decoupler having a frictional member transmitting a torque between the hub and the pulley.

Background of the Invention

Isolators in engine accessory belt drives provide a vibration isolation function by utilizing a resilient member between the pulley and hub that is attached to the rotor of the alternator. Since the pulley and hub are connected, the relative motion between these two members is restricted. The stiffness of the resilient member is chose such that the first mode of vibration of the belt drive system is less that the firing frequency of the engine during idling. Therefore, at idle the isolator attenuates the vibration of the pulley, reducing the influence of the pulley on the rotor. Because the rotor vibration is reduced, less torque is required to be transmitted by the pulley and therefore the peak belt tensions are reduced. As a result, there is less chance the tensioner spans will become tight, move the tensioner arm, and slacken the belt span ahead of the alternator in the belt movement direction. This reduces the possibility of belt chirp noises. Isolators are very effective during normal engine operation, but have limited functionality during start-up and shut-down. This is because the system passes through a resonance during start-up and shut down.

To address this problem, decouplers provide a one way clutching feature. During crankshaft pulley acceleration in the engine start-up and running phases, the pulley and hub are locked to each other and the device behaves as a solid pulley. However, during the deceleration phases, the hub can rotate past or "overrun" the pulley. This is useful because it prevents the rotor inertia from creating high tensions in the tensioner span causing the tensioner arm to rotate away from the belt, thereby, avoiding belt slip noise. The decoupler may require a small torque to develop before the device actually overruns. Since there is no connection between the pulley and hub in the overrun mode, the pulley can rotate unrestricted. Decouplers function well for engine start-up and shut down events but are only somewhat adequate during engine running especially if the alternator is producing large current.

Representative of the art is US patent no. 5,139,463 which discloses a serpentine belt drive system for an automotive vehicle in which the sequence of driven assemblies includes an alternator assembly comprising a housing and an armature assembly mounted in the housing for rotation about an armature axis. A hub structure is carried by the armature assembly outwardly of the housing for rotation therewith about the armature axis. A coil spring is disposed in operative relation between the alternator pulley and the hub structure for transmitting the driven rotational movements of the alternator pulley by the serpentine belt to the hub structure such that the armature assembly is rotated in the same direction as the alternator pulley while being capable of instantaneous relative resilient rotational movements in opposite directions with respect to the alternator pulley during the driven rotational movement thereof.

Document WO 2005/057037 is considered being the closest prior art and shows the preamble of claim 1.

What is needed is a torsional decoupler having a frictional member transmitting a torque between the hub and the pulley. The present invention meets this need.

Summary of the Invention

The primary aspect of the invention is to provide a torsional decoupler having a frictional member transmitting a torque between the hub and the pulley.

Other aspects of the invention will be pointed out or made obvious by the following description of the invention and the accompanying drawings.

The invention comprises a torsional decoupler comprising a hub having a hub surface, the hub surface having a profile, a pulley having a pulley surface, the pulley surface having a profile, a frictional member disposed between the hub surface and the pulley surface, the frictional member frictionally engaging at least one of the pulley surface or the hub surface, and the frictional member transmitting a torque between the hub and the pulley such that a movement occurs between the hub and the pulley.

Brief Description of the Drawings

The accompanying drawings, which are incorporated in and form a part of the specification, illustrate preferred embodiments of the present invention, and together with a description, serve to explain the principles of the invention.

Fig. 1 is an exploded view of the torsional decoupler.
Fig. 2 is a cross-sectional view of the torsional decoupler.

Fig. 3 is a typical engine belt drive system.
Fig. 3A is a graph of typical engine speed during start up.
Fig. 4 is the typical engine belt drive system shown in Fig. 3.
Fig. 4A is a graph of typical engine speed during start up.
Fig. 5 is a graph showing the asymmetric torque limiting nature of the device.
Fig. 6 is a schematic of asymmetric torque limits using hubload.
Fig. 7 is a schematic of asymmetric torque limits using hubload.
Fig. 8 is a graph showing transmitted torque based upon belt tension.
Fig. 9 is a perspective view of a not claimed embodiment.
Fig. 10 is a cross-sectional view of the not claimed embodiment of Fig. 9.

Detailed Description of the Preferred Embodiment

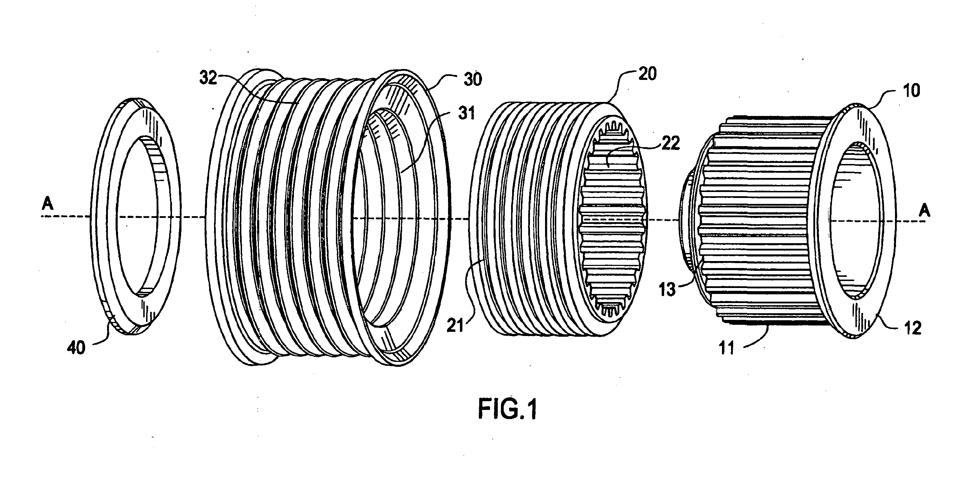

Fig. 1 is an exploded view of the torsional decoupler. The inventive torsional decoupler reduces or eliminates the harmful effects of torsional vibration and high alternator inertia on accessory belt drives. High torsional vibration at a crankshaft pulley results from the torque pulses created by the firing of internal combustion (IC) engine cylinders. The frequency of this vibration is related to the RPM of the engine and the number of cylinders.

Torsional vibration at the crankshaft is transmitted through the serpentine belt to all accessories within the belt drive system. Of special concern is the alternator since it has a relatively high inertia and a relatively "small" diameter pulley. A relatively small diameter pulley amplifies the angular vibration and together with the high inertia requires high torques to propel the alternator rotor. A high torque results in high peak belt tension. This can result in excessive tensioner arm motion leading to premature failure and belt slip resulting in chirp noises during engine start-up or shut-down. High torques can also cause violent belt flapping. The inventive decoupler reduces or eliminates theses problems.

The decoupler comprises a hub 10, to which is engaged a friction member 20 and a pulley 30. Lock ring 40 is used to hold the components together.

Hub 10 comprises a grooved surface profile 11. The grooves 11 extend parallel to an axis of rotation A-A. At one end of hub 10 is a flange 12. Hub 10 can be attached to an alternator shaft using a nut (not shown).

Friction member 20 comprises a length of frictional material, which may comprise plastic, or natural or synthetic rubber or similar elastomeric material. The member may comprise any conventional and/or suitable cured or thermoplastic elastomeric composition. Suitable elastomers that may be utilized for this purpose include for example polyurethane elastomers (including as well polyurethane/urea elastomers) (PU), polychloroprene rubber (CR), acrylonitrile butadiene rubber (NBR), hydrogenated NBR (HNBR), styrene-butadiene rubber (SBR), alkylated chlorosulfonated polyethylene (ACSM), epichlorohydrin, polybutadiene rubber (BR), natural rubber (NR), and ethylene alpha olefin elastomers such as ethylene propylene copolymers (EPM), ethylene propylene diene terpolymers (EPDM), ethylene octene copolymers (EOM), ethylene butene copolymers (EBM), ethylene octene terpolymers (EODM); and ethylene butene terpolymers (EBDM); and PPA or silicone rubber, or a combination of any two or more of the foregoing.

The pulley material can be steel, plastic or aluminum or a combination of two or more of the foregoing.

A first outer surface 21 comprises a ribbed profile. Each "rib" extends in a direction that is parallel to a circumference of the member 20. A second inner surface 22 comprises a toothed profile. A "tooth" (or groove) extends in a direction that is at 90°, or normal, to the rib direction. In addition, the tooth is disposed normal to a direction of rotation of the pulley.

In a further embodiment, the outer surface 21 may comprise a toothed profile and the inner surface 22 may comprise a ribbed profile. In the alternate embodiment surfaces 21, 22 would engage cooperating surfaces 11, 31 having like profiles, namely, surface 11 would be ribbed and surface 31 would be toothed.

Surface 22 cooperatively engages the grooved surface 11. Member 20 is not necessarily a continuous loop, but instead may comprise a length of material that is simply wrapped around hub 10. In a further embodiment the member 20 may be manufactured as a continuous loop.

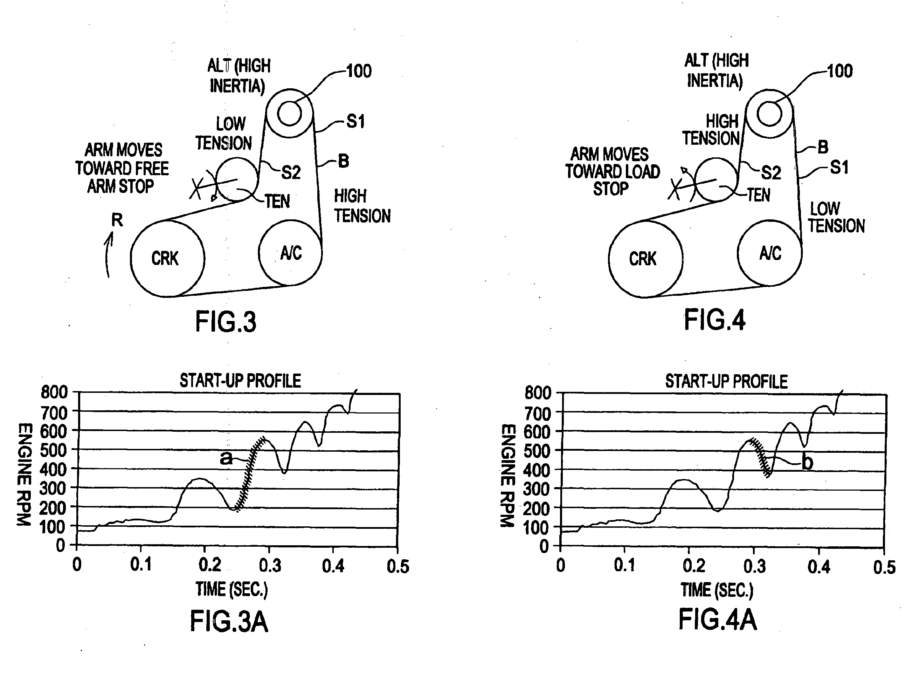

Pulley 30 comprises a ribbed profile on inner surface 31. Surface 31 cooperatively engages surface 21 of member 20. Outer surface 32 also comprises a ribbed profile for engaging a serpentine belt, see Fig. 3. Lock ring 40 engages a groove 13 in hub 10 to hold the torsional decoupler together.

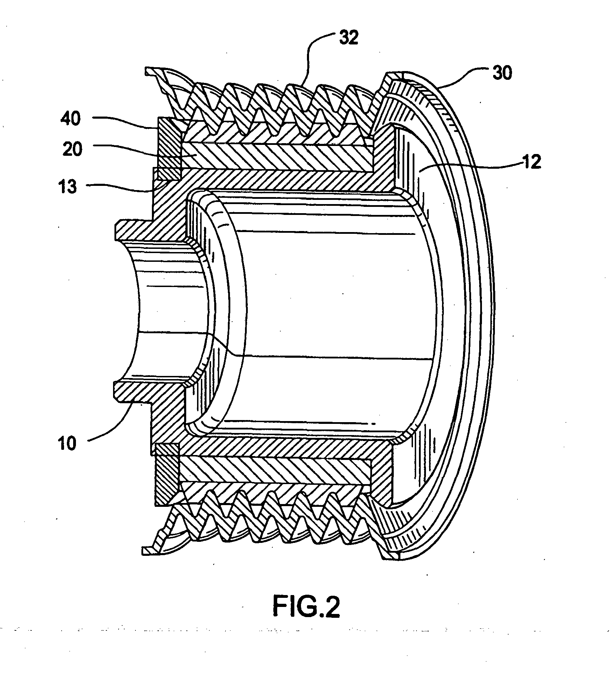

Fig. 2 is a cross-sectional view of the torsional decoupler. To assemble the decoupler, surface 21 of member 20 is engaged within pulley 30 in contact with surface 31. The combination of pulley 30 and the surface 22 of member 20 is then slid into engagement with grooves 11 on hub 10. Lock ring 40 is then engaged with groove 13. Member 20 should not be subjected to any compression or preloading between hub 10 and pulley 30 as part of the completed assembly.

The length of member 20 only need be sufficient to fit within pulley 30 while engaged with surface 31. The ends of member 20 need not be in contact, and, a small gap (~≤1mm) will not be detrimental to operation of the decoupler. Of course the ends may be in contact without affecting operation.

Fig. 3 is a typical engine belt drive system. The system typically comprises an alternator (ALT) having a high inertia, an air conditioner compressor (A/C), and a crankshaft pulley (CRK). A belt (B) is entrained between each of the components. A tensioner (Ten) is engaged with the belt to apply and maintain a belt load.

Fig. 3A is a graph of typical engine speed during start up. During portions of the start up phase when the engine is accelerating as indicated by the shaded portion "a" the belt spans after the alternator (S1) experiences high tension since positive torque is needed to accelerate the alternator inertia. The high tension causes belt stretch and the increase in belt length is accumulated in the tensioner span (S2). This causes the tensioner arm to move towards its free-arm stop. The tensioner maintains a controlled belt tension in the span before (S2) the alternator ALT. Nothing extraordinary happens in terms of belt noise.

Fig. 4 is the typical engine belt drive system shown in Fig. 3. Fig. 4A is a graph of typical engine speed during start up. During the phase when the engine is decelerating (shaded portion "b" in Fig. 4A) the alternator inertia will tend to continue to rotate at its current speed in relation to its inertia, at which time the alternator ALT will become the prime mover in the belt drive system. This causes the normally slack span around the tensioner (S2) to become tight. If the tension is high enough to overcome the spring load and damping in the tensioner, the tensioner arm will move towards its load stop (away from the belt), see Fig. 4. This in effect decreases the drive length and causes the belt spans before the alternator to slacken and loose tension. When the tension drops below some critical value, the drive will suffer from belt chirp noises.

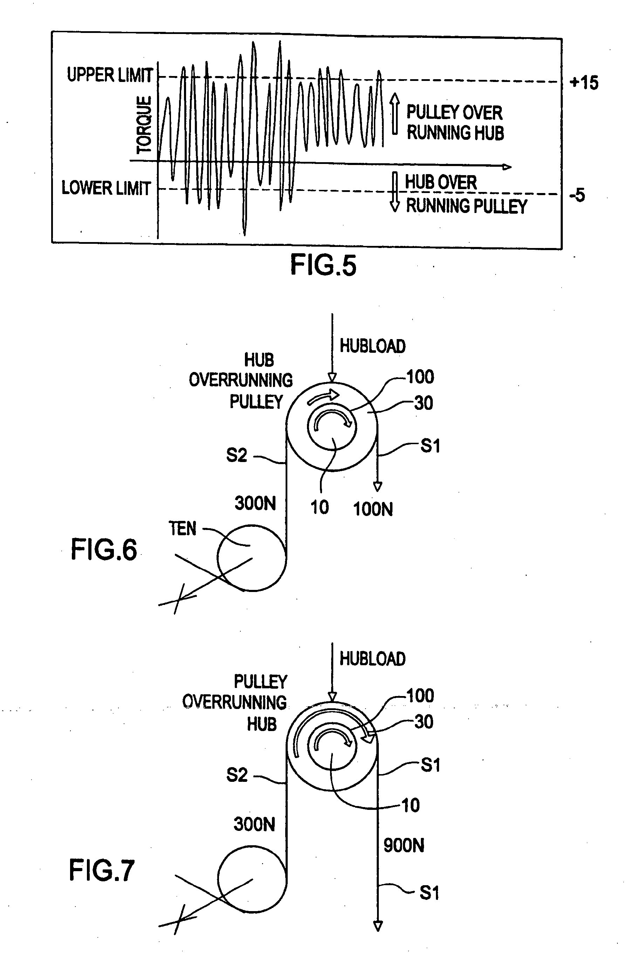

Fig. 5 is a graph showing the asymmetric torque limiting nature of the device. The principle of the device is to use hubload generated friction to asymmetrically limit the torque transferable through the torsional decoupler.

Assuming positive torque transfer occurs when the pulley 30 is driving the hub 10, and negative torque transfer occurs when the hub 10 is driving the pulley 30, then it is desirable to limit the positive torque to a value slightly above that which is required by an alternator ALT to generate maximum current. This is determined by the frictional interface between surface 21 and 31.

It is also desirable to be able to accelerate the alternator inertia and limit the negative torque to a small value to prevent the tightening of the tensioner normally slack span (S2), causing the tensioner Ten to move resulting in belt noise.

This is demonstrated in Fig. 5. It is assumed that the coefficient of friction of the frictional interface (surfaces 21, 31) is approximately 0.5 and the pulley diameter is approximately 50mm. Between approximately -5Nm and approximately +15Nm, the frictional interface (21, 31) can support the torque generated at the belt (B)- pulley (30) interface. It is assumed that the tensioner provides approximately 300N nominal belt tension. Damping in the tensioner is present and will have some affect on the numbers in the illustrative example.

When the hub 10 is driving the pulley 30 during an engine deceleration, the tensioner span (S2) remains at the design tension of approximately 300N. However, the span (S1) after the alternator begins to loose tension. When the hubload reaches approximately 400 N, the frictional interface reaches its limit of approximately -5Nm and then slip occurs preventing the build-up of tension in the tensioner span.

When the pulley 30 is driving the hub 10, the span before the pulley (S2) remains at the design tension of approximately 300N. However, the tension in span S1 increases. When this tension reaches approximately 900N, the frictional interface can only support approximately +15Nm of torque. Slip occurs beyond this point. "Hubload" refers to the sum of the tension load in each belt span across the decoupler 100, (S1+S2).

Fig. 6 is a schematic of asymmetric torque limits using hubload. In Fig. 6 the engine deceleration situation is illustrated. This means that the alternator shaft and hub 10 is driving the pulley 30, for example, due to the inertia of the alternator shaft and rotor (not shown). The belt tension on span S1 is approximately 100N and the belt tension in span S2 is approximately 300 N.

The torque being transmitted through the torsional decoupler for this condition is:

$$\texttt{Torque = 0.5*(300+100)*0.05/2 = 5Nm}$$

Fig. 7 is a schematic of asymmetric torque limits using hubload. Fig. 7 is the engine accelerating condition. This means the pulley is driving the hub. The belt tension on span S1 is approximately 900N and the belt tension in span S2 is approximately 300N. The torque transmitted through the decoupler for this condition is:

$$\texttt{Torque = 0.5*(300+900)*0.05/2 = 15Nm}$$

As noted elsewhere in this specification, the principal of operation of the torsional decoupler involves the frictional relationship between surface 21 and surface 31. During operation, due to the frictional coefficient between surface 31 and surface 21, pulley 30 angularly progresses in a rotational + or - direction with respect to the frictional member 20, depending on the torque flow direction. That is, given two adjacent points on the pulley 30 and the member 20, the points will move with respect to each other in a progressive manner during operation of the torsional decoupler. In effect, one component will be seen to "roll" with respect to the other. The resulting angular progression is on the order of fractions of a degree per revolution of the decoupler. The hub and the pulley are frictionally engaged such that a predetermined amount of micro-slip of the frictional engagement occurs resulting in a relative rotation, or angular progression, between the hub and pulley for each rotation of the decoupler. Further, the transmitted torque magnitude in a first direction is not equal to the transmitted torque magnitude in an opposite direction.

This is somewhat analogous to the manner in which a tire rolls on pavement. Namely, in operation, some microslipping occurs between surface 21 and 31 as torque is being transmitted from the pulley to the frictional member, or, from the frictional member to the pulley. This characteristic is not the same as "slip" that one normally encounters, for example, when one slips on ice. The slip described for this device relates to the behavior of the materials in contact on the microscopic level. "Microslip" relates to the continuously occurring process where bonds are made and broken across the entirety of the contacting surfaces which gives the result of the surfaces moving with respect to each other, although it is not a gross "slip" that presents as part of daily experience on a macroscopic level, such as when a car slides on ice.

As noted, surface 31 of pulley 30 "rolls" upon surface 21 since the contact between surface 21 and surface 31 is not equal around the entire circumference. Consequently, the mechanism by which the decoupler operates is not based upon the frictional member having a resilient characteristic similar to a resilient rubber ball. Although resilience this is not excluded as a feature of the frictional member, the necessary feature is the suitable coefficient of friction (COF) between surfaces 21 and 31.

In the example in Fig. 6 and Fig. 7 the coefficient of friction between frictional element and pulley inner profile (surfaces 21, 31) was approximately 0.5. This COF includes the "wedging effect" of the ribbed profile between the pulley and the frictional member surfaces.

The inventive isolator may transmit torque in either rotational direction (+ or -) using the principles described in this specification. Further, the torque transmission magnitude can be asymmetric according to the rotational direction, meaning the magnitude of torque transmitted in one direction is not equal to the magnitude of torque transmitted in the opposite rotational direction. For the example system, operating conditions which cause transmitted torques to exceed the range of approximately -5Nm to +15Nm may result in gross, unlimited slip between the pulley and the frictional member, or between the frictional member and the hub depending upon the configuration of the isolator. Since the torque transmitted is a function of hubload, changes to the hubload will contribute to changes in transmitted torque. Therefore, the amount of torque transmitted in either rotational direction can be selected as needed.

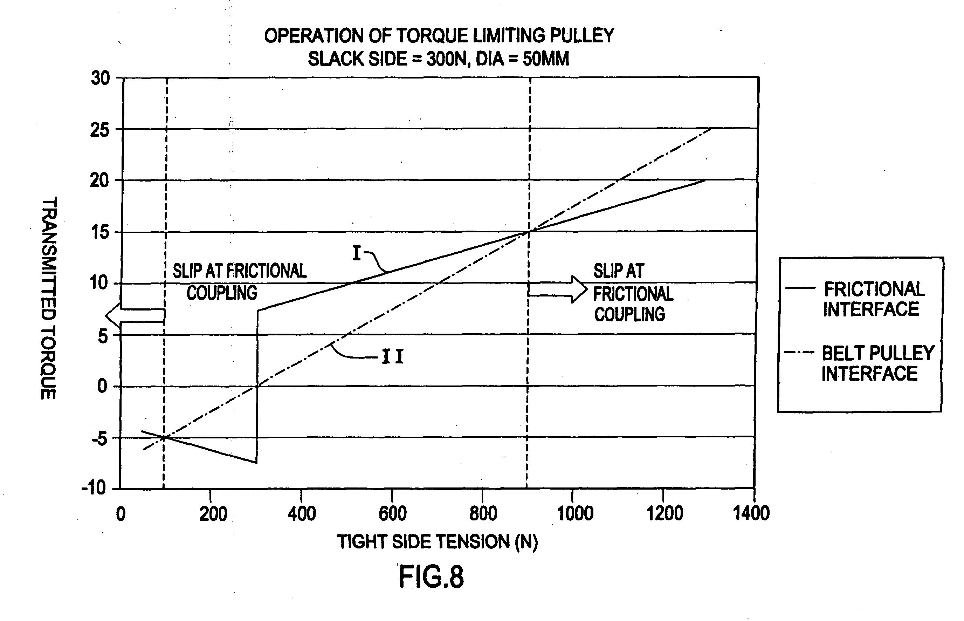

Fig. 8 is a graph showing transmitted torque based upon belt tension. The choice of coefficient of friction value determines the limiting torque values for given hubloads. Two curves are presented. The first (I) represents the behavior of the frictional interface between surfaces 21 and 31. The second curve (II) represents that behavior of the interface between the belt (B) and the pulley surface 32. The shaded area represents the operating range where torque transmission occurs. The area less than a belt tension of approximately 100N and greater than approximately 900N represents the operating range or the torsional decoupler where slip occurs.

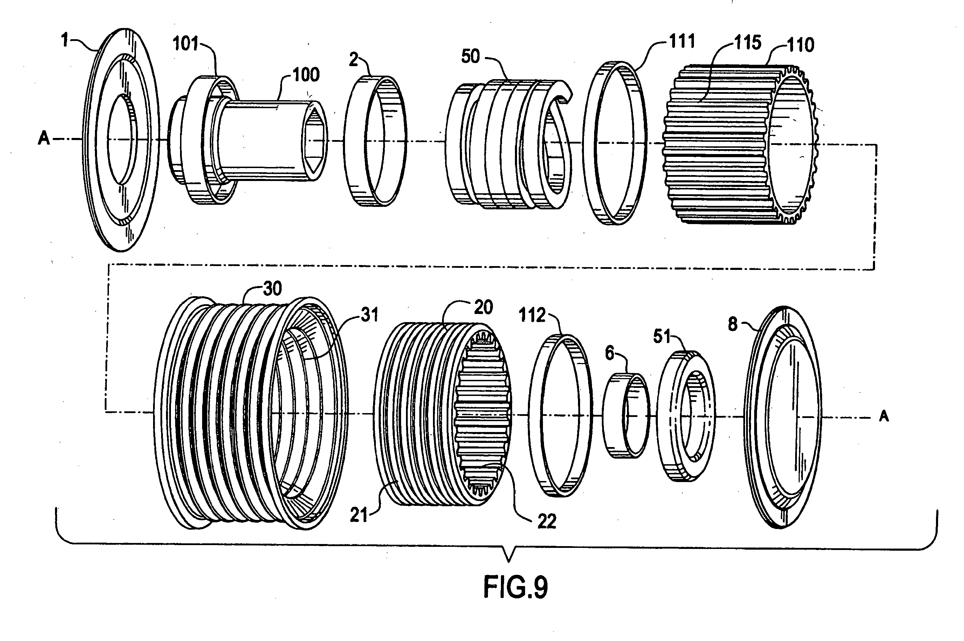

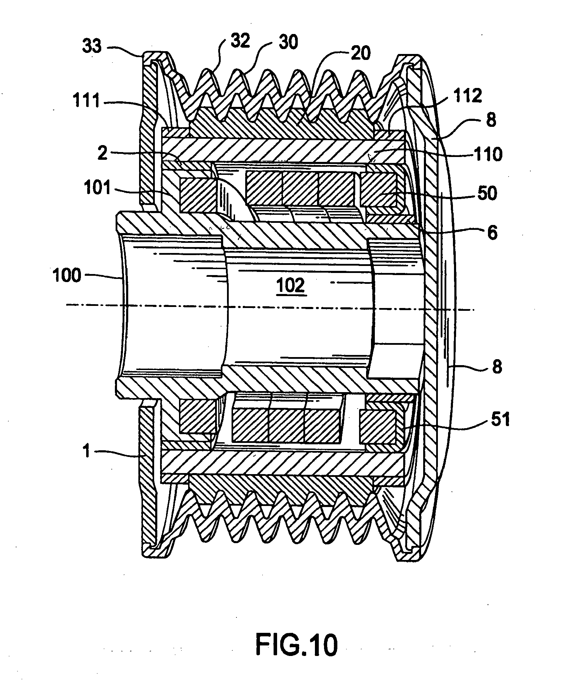

Fig. 9 is a perspective view of a not claimed embodiment. Except as otherwise described for this Fig. 9 and Fig. 10, the description of the invention is according to Figs. 1 through Fig. 8 inclusive.

The not claimed embodiment comprises hub 100, inner bushing 2, torsion spring 50, toothed member 110, retaining members 111, 112, frictional member 20, pulley 30, torsion spring retainer 51, dust cover 8 and locking ring 1 to keep the assembly together. Spring 50 is compressed between the torsion spring retainer 51 and flange 101 of the hub.

In this not claimed embodiment, toothed member 110, torsion spring 50, bushings 2 and 6, and torsion spring retainer 51 comprise the hub assembly. The frictional decoupler member (20) is engaged with the hub 100 through the hub assembly.

In yet another not claimed embodiment torsion spring 50 is connected directly to friction member 20. In Figs. 1-8 the friction member 20 is engaged with the hub 10 through surface 11.

Torsion spring 50 is fixedly connected to flange 101. Toothed member 110 is fixedly connected to torsion spring retainer 51, for example by press fit. Torsion spring retainer 51 is slidingly engaged with hub 100 through bushing 6. Frictional member 20 is retained on surface 115 of toothed member 110 between retaining members 111, 112. Toothed member 110 comprises a toothed surface 115 for cooperatively engaging surface 22. Surfaces 21 and 31 interact as described elsewhere in this specification.

Toothed member 110 is slidingly engaged with flange 101 through bushing 2. Bushings 2 and 6 provide damping between the pulley and hub. The amount of damping is related to the coefficient of friction of the mating surfaces and hubload imparted by the belt.

As an example, as to bushings 2 and 6, Oiles Techmet B bushing on steel has a COF of 0.18. The spring rate for spring 50 is approximately 0.27Nm/deg. The pulley diameter is approximately 56.5 mm. The numerical values are only offered as examples and are not intended to limit the breadth or scope of the invention.

In this not claimed embodiment, the spring load will be significantly lower since the frictional decoupler (and the friction between pulley inner profile 31 and frictional member surface 21) will limit the amount of torque transmitted to and from the pulley 30 to the hub 100. For example, transmitted torque can be reduced from 30 N-m to 20 N-m.

Torque transmitted by the decoupler is asymmetric and will not equally load the torsion spring 50 in both operating directions. In case of a prior art torsional decoupler torque is transmitted through the spring in the range of approximately -30N-m to +30N-m. In case of this not claimed embodiment torque will be transmitted in the range of approximately -5N-m to +20N-m. This is a function of the hubload and the coefficient of friction between the sliding surfaces.

Fig. 10 is a cross-sectional view of the not claimed embodiment in Fig. 9. Bore 102 receives an alternator shaft (not shown). Belt bearing surface 32 has a profile for engaging a multi-ribbed belt (not shown). Locking ring 1 is press fit into pulley 30 in flange 33.

All numbers used in this specification are only presented as examples and are not intended to limit the breadth, interpretation or operation of the device.

Although a form of the invention has been described herein, it will be obvious to those skilled in the art that variations may be made in the construction and relation of parts without departing from the scope of the invention described herein.

**Claims**

1.   A torsional decoupler comprising:

   a hub (10) having a hub surface, the hub surface having a profile (11);
   a pulley (30) having a pulley surface (31), the pulley surface (31) having a profile;
   a frictional member (20) disposed between the hub surface and the pulley surface (31), the frictional member (20) frictionally engaging at least one of the pulley surface (31) or the hub surface; and **characterized in that** the frictional member (20) transmits a torque between the hub (10) and the pulley (30) such that there is a continuous angular progression between the hub (10) and the pulley (30) as a torque is transmitted.

2.   The torsional decoupler as in claim 1, wherein the hub surface comprises a toothed profile (11).

3.   The torsional decoupler as in claim 1, wherein the pulley surface (31) comprises a ribbed profile.

4.   The torsional decoupler as in claim 1, wherein the pulley (30) further comprises a surface (32) having a ribbed profile.

5.   The torsional decoupler as in claim 1, further comprising a lock ring (40) engaged to the hub (10) for retaining the pulley (30) and frictional member (20).

6.   The torsional decoupler of claim 1, wherein
   the hub (10) and the pulley (30) are frictionally engaged such that a predetermined amount of micro-slip of the frictional engagement occurs for each rotation of the torsional decoupler.

7.   The torsional decoupler as in claim 6, wherein the frictional member (20) is disposed between the hub (10) and the pulley (30) the frictional member (20) having a surface (22) with a profile for engaging the hub (10).

8.   The torsional decoupler as in claim 6, wherein the frictional member (20) is disposed between the hub (10) and the pulley (30) the frictional member (20) having a surface (21) with a profile for engaging the pulley (30).

9.   The torsional decoupler as in claim 7, wherein the profile (22) comprises a toothed profile.

10.   The torsional decoupler as in claim 8, wherein the profile (21) comprises a ribbed profile.

11.   The torsional decoupler as in claim 1 or 6, wherein a torque transmission magnitude is asymmetric according to a rotational direction.

12.   The torsional decoupler as in claim 1 or 6, wherein the frictional member (20) comprises a plastic material or an elastomeric material.

**Patentansprüche**

1. Torsionsentkoppler, umfassend:

   eine Nabe (10), die eine Nabenoberfläche aufweist, wobei die Nabenoberfläche ein Profil (11) aufweist;
   eine Riemenscheibe (30), die eine Riemenscheibenoberfläche (31) aufweist, wobei die Riemenscheibenoberfläche (31) ein Profil aufweist;
   ein Reibelement (20) zwischen der Nabenoberfläche und der Riemenscheibenoberfläche (31), wobei das Reibelement (20) mit mindestens einer von Riemenscheibenoberfläche (31) oder Nabenoberfläche in Reibeingriff
   steht;
   und **dadurch gekennzeichnet, dass** das Reibelement (20) ein Drehmoment zwischen der Nabe (10) und der
   Riemenscheibe (30) überträgt, sodass eine durchgehende Winkelprogression zwischen der Nabe (10) und der
   Riemenscheibe (30) vorliegt, wenn ein Drehmoment übertragen wird.

2. Torsionsentkoppler nach Anspruch 1, wobei die Nabenoberfläche ein Zahnprofil (11) umfasst.

3. Torsionsentkoppler nach Anspruch 1, wobei die Riemenscheibenoberfläche (31) ein Lamellenprofil umfasst.

4. Torsionsentkoppler nach Anspruch 1, wobei die Riemenscheibe (30) ferner eine Oberfläche (32) mit einem Lamellenprofil umfasst.

5. Torsionsentkoppler nach Anspruch 1, ferner umfassend einen Sperrring (40), der in die Nabe (10) zum Halten der
   Riemenscheibe (30) und des Reibelements (20) eingreift.

6. Torsionsentkoppler nach Anspruch 1, wobei die Nabe (10) und die Riemenscheibe (30) in Reibeingriff stehen,
   sodass eine vorbestimmte Menge eines Mikroschlupfes des Reibeingriffs während jeder Drehung des Torsionsentkopplers stattfindet.

7. Torsionsentkoppler nach Anspruch 6, wobei das Reibelement (20) zwischen der Nabe (10) und der Riemenscheibe
   (30) angeordnet ist, wobei das Reibelement (20) eine Oberfläche (22) mit einem Profil zum Eingreifen in die Nabe
   (10) aufweist.

8. Torsionsentkoppler nach Anspruch 6, wobei das Reibelement (20) zwischen der Nabe (10) und der Riemenscheibe
   (30) angeordnet ist, wobei das Reibelement (20) eine Oberfläche (21) mit einem Profil zum Eingreifen in die Riemenscheibe (30) aufweist.

9. Torsionsentkoppler nach Anspruch 7, wobei das Profil (22) ein Zahnprofil umfasst.

10. Torsionsentkoppler nach Anspruch 8, wobei das Profil (21) ein Lamellenprofil umfasst.

11. Torsionsentkoppler nach Anspruch 1 oder 6, wobei eine Drehmomentübertragungsgröße asymmetrisch gemäß
    einer Drehrichtung ist.

12. Torsionsentkoppler nach Anspruch 1 oder 6, wobei das Reibelement (20) ein Kunststoffmaterial oder ein Elastomermaterial umfasst.

**Revendications**

1. Découpleur de torsion comprenant :

   un moyeu (10) ayant une surface de moyeu, la surface de moyeu ayant un profilage (11) ;
   une poulie (30) ayant une surface de poulie (31), la surface de poulie (31) ayant un profilage ;
   un organe de friction (20) disposé entre la surface de moyeu et la surface de poulie (31), l'organe de friction
   (20) s'engageant par friction avec au moins une de la surface de poulie (31) ou de la surface de moyeu ; et **caractérisé en ce que** l'organe de friction (20) transmet un couple entre le moyeu (10) et la poulie (30) de telle sorte qu'il existe une progression angulaire continue entre le moyeu (10) et la poulie (30) pendant qu'un couple est transmis.

2. Découpleur de torsion selon la revendication 1, dans lequel la surface de moyeu comprend un profilage denté (11).

3. Découpleur de torsion selon la revendication 1, dans lequel la surface de poulie (31) comprend un profilage cannelé.

4. Découpleur de torsion selon la revendication 1, dans lequel la poulie (30) comprend en outre une surface (32) ayant un profilage cannelé.

5. Découpleur de torsion selon la revendication 1, comprenant en outre une bague de verrouillage (40) en prise avec le moyeu (10) pour retenir la poulie (30) et l'organe de friction (20).

6. Découpleur de torsion selon la revendication 1, dans lequel le moyeu (10) et la poulie (30) sont en prise par friction de telle sorte qu'une quantité prédéterminée de micro-glissement de l'engagement par friction se produise pour chaque rotation du découpleur de torsion.

7. Découpleur de torsion selon la revendication 6, dans lequel l'organe de friction (20) est disposé entre le moyeu (10) et la poulie (30), l'organe de friction (20) ayant une surface (22) avec un profilage pour l'engagement avec le moyeu (10).

8. Découpleur de torsion selon la revendication 6, dans lequel l'organe de friction (20) est disposé entre le moyeu (10) et la poulie (30), l'organe de friction (20) ayant une surface (21) avec un profilage pour l'engagement avec la poulie (30).

9. Découpleur de torsion selon la revendication 7, dans lequel le profilage (22) comprend un profilage denté.

10. Découpleur de torsion selon la revendication 8, dans lequel le profilage (21) comprend un profilage cannelé.

11. Découpleur de torsion selon la revendication 1 ou 6, dans lequel une amplitude de transmission de couple est asymétrique suivant un sens de rotation.

12. Découpleur de torsion selon la revendication 1 ou 6, dans lequel l'organe de friction (20) comprend un matériau en plastique ou un matériau élastomère.

FIG.1

FIG.2

ALT (HIGH INERTIA)

LOW TENSION

ARM MOVES TOWARD FREE ARM STOP

R

CRK     A/C

S1
B
S2
TEN
HIGH TENSION
100

FIG.3

ALT (HIGH INERTIA)

HIGH TENSION

ARM MOVES TOWARD LOAD STOP

CRK     A/C

B
S2
S1
TEN
LOW TENSION
100

FIG.4

START-UP PROFILE

a

FIG.3A

START-UP PROFILE

b

FIG.4A

EP 2 235 399 B1

**FIG.5**

**FIG.6**

**FIG.7**

OPERATION OF TORQUE LIMITING PULLEY
SLACK SIDE = 300N, DIA = 50MM

SLIP AT FRICTIONAL COUPLING

SLIP AT FRICTIONAL COUPLING

I

II

TRANSMITTED TORQUE

TIGHT SIDE TENSION (N)

—— FRICTIONAL INTERFACE

—·—· BELT PULLEY INTERFACE

FIG.8

EP 2 235 399 B1

FIG.9

EP 2 235 399 B1

FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5139463 A

- WO 2005057037 A